# EUROPÄISCHE PATENTANMELDUNG

(11) **EP 4 451 166 A1**
(43) Veröffentlichungstag der Anmeldung: **23.10.2024**
(21) Anmeldenummer: 23168206.3
(22) Anmeldetag: 17.04.2023
(51) Int. Cl.: G06F 30/23, G06F 30/27, G06F 111/04, G06F 119/14

(54) **VERFAHREN UND ANORDNUNGEN ZUM ERMITTELN VON MONTAGEOPERATIONEN FÜR EIN PRODUKT SOWIE ZUM MONTIEREN DES PRODUKTS**

(71) Anmelder: Siemens Aktiengesellschaft, 80333 München (DE)
(72) Erfinder: Fischer, Jan, 81541 München (DE); Liebig, Veronika, 86551 Aichach (DE); Paffrath, Meinhard, 85622 Feldkirchen (DE); Ullmann, Florian, 83024 Rosenheim (DE)
(74) Vertreter: Siemens Patent Attorneys

(57) **Zusammenfassung**

Es wird ein digitales Produktmodell (PM) eingelesen, das Bauteile des Produkts (P) hinsichtlich ihrer räumlichen Geometrie und räumlichen Anordnung im Produkt (P) in Form von virtuellen Bauteilen (B, B1, B2, SH) spezifiziert. Erfindungsgemäß wird ein jeweiliges virtuelles Bauteil (B, B1, B2, SH) im Produktmodell (PM) virtuell bewegt, währenddessen ein Verlauf (OP) einer Überlappung des bewegten virtuellen Bauteils mit mindestens einem anderen virtuellen Bauteil des Produkts (P) ermittelt wird. Weiterhin wird mittels einer Mustererkennung (ME) geprüft, ob der ermittelte Überlappungsverlauf (OP) einem Verlaufsmuster (VM) einer Schnappverbindung entspricht. Bei positivem Prüfungsergebnis wird dann aus der virtuellen Bewegung des jeweiligen virtuellen Bauteils eine Fügeoperation (FO) abgeleitet, und es wird eine Simulation der Fügeoperation (FO) durchgeführt, durch die eine Deformation (D) des jeweils bewegten virtuellen Bauteils und/oder des mindestens einen anderen virtuellen Bauteils sowie eine zur Deformation (D) erforderliche Fügekraft (F) ermittelt werden. Die Fügeoperation (FO) wird dann mit der ermittelten Fügekraft (F) als Montageoperation (MO) zur Montage des Produkts (P) ausgegeben.

## Beschreibung

Unabhängig vom grammatikalischen Geschlecht eines bestimmten Begriffes sind Personen mit männlicher, weiblicher oder anderer Geschlechteridentität mit umfasst.

Zur Herstellung von komplexen technischen Produkten, wie beispielsweise Robotern, Motoren, Turbinen, Verbrennungskraftmaschinen, Werkzeugen, Kraftfahrzeugen oder deren Komponenten, werden in zunehmendem Maße rechnergestützte Konstruktionssysteme, z.B. sogenannte CAD-Systeme (CAD: Computer-Aided Design) eingesetzt. Mittels eines solchen Konstruktionssystems können detaillierte digitale Modelle des herzustellenden Produkts erstellt werden, die insbesondere rechnergestützt weiterverarbeitet werden können.

Anhand des digitalen Modells des Produkts kann dessen Montage geplant werden. Zu diesem Zweck wird das digitale Modell häufig von Experten interpretiert und in einen Montageplan umgesetzt, der zur Ansteuerung einer automatisierten Produktionsanlage geeignet ist. Eine solche Vorgehensweise ist im automatisierten Industrieumfeld, in dem Roboter in Serienproduktionen mit hohen Stückzahlen stets die gleichen Tätigkeiten ausführen, in der Regel sehr effizient.

Im Zuge einer fortschreitenden Individualisierung von Produkten wird jedoch in zunehmendem Maße angestrebt, die Erstellung eines Montageplans zumindest teilweise zu automatisieren. Zur Ermittlung einer Montagereihenfolge kann ein oft als "Assembly by Disassembly" bezeichnetes Prinzip angewandt werden. Hierbei wird analysiert, wie sich das digitale Modell des Produkts in einem CAD-System kollisionsfrei zerlegen lässt. Durch Umkehrung der Zerlegungsoperationen kann häufig eine Montagereihenfolge zumindest teilweise ermittelt werden.

In vielen Fällen lässt sich das herzustellende Produkt jedoch nicht in passender Weise zerlegen.

Es ist Aufgabe der vorliegenden Erfindung, Verfahren und Anordnungen zum Ermitteln von Montageoperationen für ein Produkt sowie zum Montieren des Produkts anzugeben, mit denen sich ein Planungsaufwand und/oder ein Produktionsaufwand verringern lässt.

Gelöst wird diese Aufgabe durch Verfahren mit den Merkmalen der Patentansprüche 1 und 10, durch Anordnungen mit den Merkmalen der Patentansprüche 11 und 12, durch ein Computerprogrammprodukt mit den Merkmalen des Patentanspruchs 13 sowie durch ein computerlesbares Speichermedium mit den Merkmalen des Patentanspruchs 14.

Zum Ermitteln von Montageoperationen für ein aus mehreren Bauteilen zusammenzusetzendes Produkt, wird ein digitales Produktmodell eingelesen, das die Bauteile hinsichtlich ihrer räumlichen Geometrie und räumlichen Anordnung im Produkt in Form von virtuellen Bauteilen spezifiziert. Erfindungsgemäß wird ein jeweiliges virtuelles Bauteil im Produktmodell virtuell bewegt, währenddessen ein Verlauf einer Überlappung des bewegten virtuellen Bauteils mit mindestens einem anderen virtuellen Bauteil des Produkts ermittelt wird. Weiterhin wird mittels einer Mustererkennung geprüft, ob der ermittelte Überlappungsverlauf einem Verlaufsmuster einer Schnappverbindung entspricht. Bei positivem Prüfungsergebnis wird dann aus der virtuellen Bewegung des jeweiligen virtuellen Bauteils eine Fügeoperation abgeleitet. Die Fügeoperation kann insbesondere eine Fügetrajektore spezifizieren, entlang der das jeweilige virtuelle Bauteil und damit das jeweilige reale Bauteil in das zusammenzufügende Produkt einzufügen ist. Weiterhin wird bei positivem Prüfungsergebnis eine Simulation der Fügeoperation durchgeführt, durch die eine durch die Fügeoperation bedingte Deformation des jeweils bewegten virtuellen Bauteils und/oder des mindestens einen anderen virtuellen Bauteils sowie eine zur Deformation erforderliche Fügekraft ermittelt werden. Durch die Simulation wird die Deformation vorzugsweise derart ermittelt, dass das jeweils bewegte virtuelle Bauteil und das mindestens eine andere virtuelle Bauteil im Zuge der Fügeoperation im deformierten Zustand überlappungsfrei aneinander vorbei gleiten. Die Fügeoperation wird dann mit der ermittelten Fügekraft als Montageoperation zur Montage des Produkts ausgegeben.

Ein weiteres erfindungsgemäßes Verfahren ist vorgesehen, um das Produkt gemäß den ermittelten Montageoperationen zu montieren.

Zum Ausführen der erfindungsgemäßen Verfahren sind Anordnungen zum Ermitteln von Montageoperationen für ein Produkt bzw. zum Montieren des Produkts, ein Computerprogrammprodukt sowie ein computerlesbares, vorzugsweise nichtflüchtiges Speichermedium vorgesehen.

Die erfindungsgemäßen Verfahren sowie die erfindungsgemäßen Anordnungen können beispielsweise mittels eines oder mehrerer Computer, Prozessoren, anwendungsspezifischer integrierter Schaltungen (ASIC), digitaler Signalprozessoren (DSP) und/der sogenannter "Field Programmable Gate Arrays" (FPGA) ausgeführt bzw. implementiert werden. Darüber hinaus können die erfindungsgemäßen Verfahren zumindest teilweise in einer Cloud und/oder in einer Edge-Computing-Umgebung ausgeführt werden.

Ein wesentlicher Vorteil der Erfindung ist insbesondere darin zu sehen, dass anhand eines digitalen Produktmodells automatisch Montageoperationen zur Montage des Produkts abgleitet werden können. Insbesondere kann auch ein Zusammenfügen von Schnappverbindungen geplant werden. Eine dazu erforderliche Fügekraft kann dabei automatisch ermittelt werden.

Vorteilhafte Ausführungsformen und Weiterbildungen der Erfindung sind in den abhängigen Ansprüchen angegeben.

Nach einer vorteilhaften Ausführungsform der Erfindung kann anhand des ermittelten Überlappungsverlaufs sowie der virtuellen Bewegung des jeweiligen virtuellen Bauteils eine räumliche Position und/oder Orientierung der Schnappverbindung ermittelt werden. Insbesondere kann eine Position oder Orientierung einer in Bewegungsrichtung befindlichen Oberfläche des jeweiligen virtuellen Bauteils ermittelt werden, sobald ein dem Verlaufsmuster der Schnappverbindung entsprechender Überlappungsverlauf signifikant ansteigt. Eine solche Position kennzeichnet in der Regel einen Beginn einer Überlappung mit einer Schnappverbindung und damit deren räumliche Position. Anhand der ermittelten Position der Schnappverbindung kann die Fügeoperation, insbesondere eine Fügetrajektorie oder Fügepose räumlich auf die Schnappverbindung ausgerichtet werden.

Gemäß einer weiteren vorteilhaften Ausführungsform der Erfindung kann das jeweilige virtuelle Bauteil auf einer Vielzahl von unterschiedlichen Pfaden virtuell bewegt werden, wobei jeweils ein Überlappungsvolumen im ermittelten Überlappungsverlauf ermittelt wird. Vorzugsweise kann hierbei ein im Überlappungsverlauf maximal auftretendes Überlappungsvolumen ermittelt werden. Aus den Pfaden kann ein erster Pfad selektiert werden, der ein geringeres Überlappungsvolumen als andere Pfade aufweist. Aus dem ersten Pfad kann dann eine Fügerichtung für das jeweilige virtuelle Bauteil abgeleitet werden, falls das Überlappungsvolumen des ersten Pfades einen vorgegebenen Schwellwert unterschreitet. Insbesondere kann ein erster Pfad in einer Weise gesucht und/oder sukzessive verlängert werden, dass dessen Überlappungsvolumen unterhalb des Schwellwerts bleibt. Der Schwellwert kann vorzugsweise so klein gewählt werden, dass das jeweilige virtuelle Bauteil im Wesentlichen frei, d.h. ohne wesentliche Überlappung mit anderen virtuellen Bauteilen entlang des ersten Pfades aus dem Produkt herausbewegt werden kann. Falls ein solcher erster Pfad gefunden wird, kann dessen Umkehrung als Fügetrajektorie verwendet werden, aus der sich wiederum eine oder mehrere Fügerichtungen ableiten lassen.

Weiterhin kann das jeweilige virtuelle Bauteil in einer Vielzahl von unterschiedlichen Orientierungen virtuell bewegt werden, wobei jeweils ein Überlappungsvolumen im ermittelten Überlappungsverlauf ermittelt wird. Vorzugsweise kann hierbei ein im Überlappungsverlauf maximal auftretendes Überlappungsvolumen ermittelt werden. Aus den Orientierungen kann eine erste Orientierung selektiert werden, die ein geringeres Überlappungsvolumen als andere Orientierungen aufweist. Aus der ersten Orientierung kann dann eine Fügeorientierung für das jeweilige virtuelle Bauteil abgeleitet werden, falls das Überlappungsvolumen der ersten Orientierung einen vorgegebenen Schwellwert unterschreitet.

Darüber hinaus können die virtuellen Bauteile in unterschiedlichen Reihenfolgen virtuell bewegt werden, wobei jeweils ein Überlappungsvolumen im ermittelten Überlappungsverlauf ermittelt wird. Vorzugsweise können hierbei Überlappungsvolumina über die für die jeweilige Reihenfolge ermittelten Überlappungsverläufe akkumuliert werden. Aus den Bewegungsreihenfolgen kann eine erste Reihenfolge selektiert werden, die ein geringeres Überlappungsvolumen als andere Bewegungsreihenfolgen aufweist. Aus der ersten Reihenfolge kann dann eine Fügereihenfolge für die virtuellen Bauteile abgeleitet werden.

Nach einer weiteren vorteilhaften Ausführungsform der Erfindung kann bei der Mustererkennung ein Verlauf eines Anstiegs eines Überlappungsvolumens im ermittelten Überlappungsverlauf, ein Maximum des Überlappungsvolumens und/oder ein Verlauf einer Abnahme des Überlappungsvolumens mit dem Verlaufsmuster verglichen werden. Auf diese Weise kann ein Schnapphaken insbesondere dann als solcher erkannt werden, wenn das Überlappungsvolumen bis zu einem Volumen eines vordefinierten Schnapphakens ansteigt und dann wieder abnimmt. Sofern mehrere Schnapphaken im Produkt vorhanden sind, kann in vielen Fällen davon ausgegangen werden, dass diese im Wesentlichen gleich oder ähnlich dimensioniert sind. In derartigen Fällen können Schnapphaken dann als solche erkannt werden, wenn die betreffenden Überlappungsvolumina zu einem im Wesentlichen gleichen oder ähnlichen Wert ansteigen und dann wieder abfallen.

Gemäß einer weiteren vorteilhaften Ausführungsform der Erfindung kann ein räumlicher Überlappungsbereich im ermittelten Überlappungsverlauf auf eine Querschnittsebene in Richtung der virtuellen Bewegung projiziert werden, wobei ein Umriss des projizierten Überlappungsbereichs auf der Querschnittsebene erfasst werden kann. Der erfasste Umriss und insbesondere eine Sequenz aufeinanderfolgender Umrisse kann dann bei der Mustererkennung mit dem Verlaufsmuster verglichen werden. Alternativ oder zusätzlich kann der räumliche Überlappungsbereich auf eine oder mehrere Querschnittsebenen senkrecht zur Richtung der virtuellen Bewegung oder auf eine oder mehrere Querschnittsebenen senkrecht zu einer Koordinatenachse projiziert werden und jeweils ein entsprechender Umriss des so projizierten Überlappungsbereichs erfasst und mit dem Verlaufsmuster verglichen werden. Bei einem Schnapphaken kann in der Regel davon ausgegangen werden, dass der Umriss eine Kurve bildet, die aus einfachen Kurvenelementen, wie Linien und Kreisbögen zusammengesetzt ist. Im Rahmen des Vergleichs kann dann insbesondere geprüft werden, ob diese Kurvenelemente oder eine Sequenz aufeinanderfolgender Kurvenelemente einem vorgegebenen Satz von Regeln genügen. Derartige Regeln können beispielsweise Bedingungen für Winkel zwischen verschiedenen Kurvenelementen oder Bedingungen für Längen verschiedener Kurvenelemente angeben und als Teil des Verlaufsmusters spezifiziert werden. Falls die Kurvenelemente alle vorgebebenen Regeln oder eine vorgegebene Auswahl oder Anzahl von Regeln erfüllen, kann durch die Mustererkennung ein Erkennen einer Schnappverbindung signalisiert werden.

Alternativ oder zusätzlich kann die Mustererkennung mittels eines Maschinenlernmoduls durchgeführt werden, das darauf trainiert ist, Verlaufsmuster von Schnappverbindungen zu erkennen. Zu diesem Zweck kann das Maschinenlernmodul beispielsweise mit einer Vielzahl von bekannten Grundformen von Schnappverbindungen trainiert werden. Zur Durchführung eines solchen Trainings stehen eine Vielzahl von effizienten Verfahren des maschinellen Lernens zur Verfügung.

Nach einer weiteren vorteilhaften Ausführungsform der Erfindung kann als Deformation eine Überlappungsbreite des ermittelten Überlappungsverlaufs ermittelt werden. Als Überlappungsbreite kann insbesondere ein Durchmesser des Umrisses des projizierten Überlappungsbereichs ermittelt werden. Vorzugsweise wird derjenige Durchmesser des Umrisses ermittelt, um den das jeweils bewegte virtuelle Bauteil oder das mindestens eine andere virtuelle Bauteil im Zuge der Fügeoperation verschiebbar ist, um überlappungsfrei aneinander vorbei zu gleiten.

Ein Ausführungsbeispiel der Erfindung wird nachfolgend anhand der Zeichnung näher erläutert. Dabei veranschaulichen jeweils in schematischer Darstellung:
- Figur 1: eine Anordnung zum Montieren eines Produkts,
- Figur 2: eine Schnappverbindung in verschiedenen Montagezuständen,
- Figur 3: eine Anordnung zum Ermitteln von Montageoperationen zum Montieren eines Produkts,
- Figur 4: einen Verlauf einer Überlappung virtuell bewegter Bauteile,
- Figur 5: eine durch eine Fügekraft bedingte Deformation einer Schnappverbindung, und
- Figur 6: eine deformationsbedingte Kräfteverteilung bei einer Schnappverbindung.

Insofern in verschiedenen Figuren gleiche oder korrespondierende Bezugszeichen verwendet werden, bezeichnen diese Bezugszeichen die gleichen oder korrespondierende Entitäten, die insbesondere wie im Zusammenhang mit der betreffenden Figur beschrieben, implementiert oder ausgestaltet sein können.

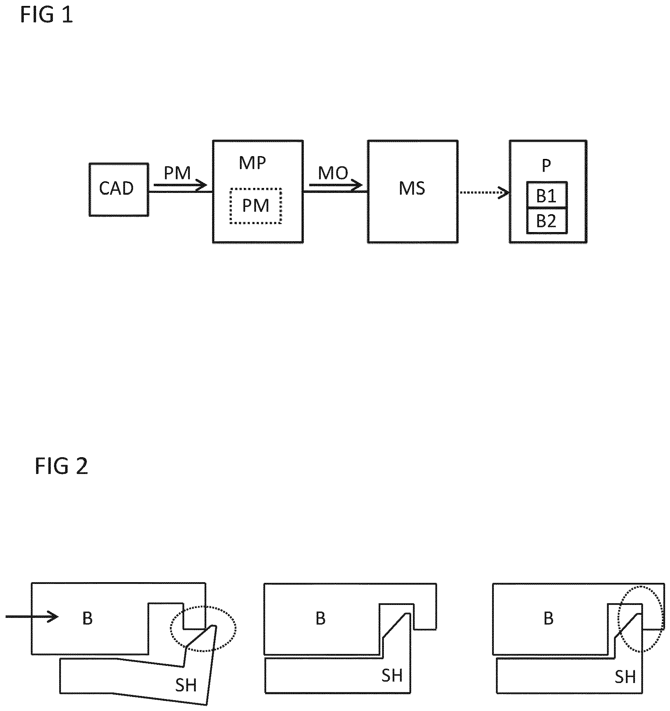

Figur 1 veranschaulicht eine Anordnung zum Montieren eines aus mehreren Bauteilen B1, B2, ... zusammenzusetzenden, körperlichen Produkts P. Auf Gründen der Übersichtlichkeit sind in den Figuren höchstens zwei dieser Bauteile explizit dargestellt. Das Produkt P kann beispielsweise ein Motor, ein Roboter, eine Turbine, eine Verbrennungskraftmaschine, ein Kraftfahrzeug oder eine von deren Komponenten sein.

Die Anordnung umfasst ein Montagesystem MS zum Montieren des Produkts P, eine mit dem Montagesystem MS gekoppelte Montageplanungseinrichtung MP zum Ermitteln von Montageoperationen MO für das Produkt P sowie ein mit der Montageplanungseinrichtung MP gekoppeltes Konstruktionssystem CAD zum Erstellen eines digitalen Produktmodells PM des Produkts P. Das Montagesystem MS kann beispielsweise einen Roboter, eine Fertigungsanlage oder eine Werkzeugmaschine umfassen. Die Montageplanungseinrichtung MP ermittelt die Montageoperationen MO für das Montagesystem MS anhand des Produktmodells PM.

Das Produktmodell PM wird durch das Konstruktionssystem CAD erzeugt. Das Konstruktionssystem CAD dient zum rechnergestützten Konstruieren des Produkts P und kann beispielsweise ein handelsübliches CAD-System (CAD: Computer-Aided Design) umfassen oder ein Teil davon sein.

Das erzeugte Produktmodell PM umfasst eine Vielzahl von Strukturdatensätzen, die das Produkt P sowie dessen Bauteile B1, B2, ... spezifizieren. Die Bauteile B1, B2, ... werden durch das Produktmodell PM hinsichtlich ihrer räumlichen Geometrie und räumlichen Anordnung im fertigen, d.h. zusammengesetzten Produkt P in Form von virtuellen Bauteilen spezifiziert. Ein jeweiliges reales Bauteil B1 bzw. B2, ... wird somit durch ein korrespondierendes virtuelles Bauteil des Produktmodells PM repräsentiert. Sofern keine Verwechslung mit den realen Bauteilen B1, B2, ... zu befürchten ist, werden im Folgenden die virtuellen Bauteile mit den gleichen Bezugszeichen bezeichnet wie die jeweils repräsentierten, realen Bauteile B1, B2,....

Eine räumliche Geometrie eines jeweiligen virtuellen Bauteils kann z.B. durch ein Gittermodell oder ein anderes Volumen- oder Strukturmodell des virtuellen Bauteils spezifiziert werden. Eine räumliche Anordnung des jeweiligen virtuellen Bauteils kann insbesondere durch Angaben über eine Position und/oder Orientierung des virtuellen Bauteils relativ zum Produkt P spezifiziert werden.

Wie oben schon angedeutet, werden aus dem Produktmodell PM durch die Montageplanungseinrichtung MP die Montageoperationen MO im Wesentlichen automatisch abgeleitet. Die Ableitung der Montageoperationen MO wird unten näher erläutert.

Die ermittelten Montageoperationen MO werden von der Montageplanungseinrichtung MP in das Montagesystem MS eingespeist, das infolgedessen das Produkt P gemäß den übermittelten Montageoperationen MO zusammensetzt.

Wie oben schon erwähnt, sollen durch die Montageplanungseinrichtung MP insbesondere auch Montageoperationen MO zum Zusammenfügen von Schnappverbindungen aus dem Produktmodell PM abgeleitet werden.

Figur 2 veranschaulicht eine solche Schnappverbindung in verschiedenen Montagezuständen. Schnappverbindungen bezeichnen insbesondere Funktionselemente zum fixierenden Zusammenfügen von Bauteilen. In der Regel verformt sich dabei zumindest eines der beteiligten Bauteile elastisch und verhakt sich anschließend, wodurch die Schnappverbindung fixiert wird.

Figur 2 veranschaulicht ein Zusammenfügen und Einrasten einer Schnappverbindung, bei der ein Bauteil B über ein weiteres, als Schnapphaken SH ausgebildetes Bauteil gezogen wird. Beim Zusammenfügen der Schnappverbindung wird das Bauteil B am Schnapphaken SH entlang geschoben, bis es - wie im linken Teil von Figur 2 durch eine punktierte Ellipse angedeutet - am Schnapphaken SH anstößt und diesen unter Kraftaufwand deformiert. Durch die Deformation kann das Bauteil B weiter geschoben werden bis der Schnapphaken SH in einer Aussparung des Bauteils B - wie im mittleren Teil von Figur 2 illustriert - einrastet. In diesem Zustand ist das Bauteil B bestimmungsgemäß montiert. Wie im rechten Teil von Figur 2 durch eine punktierte Ellipse angedeutet, ist das Bauteil B dann durch den Schnapphaken fixiert.

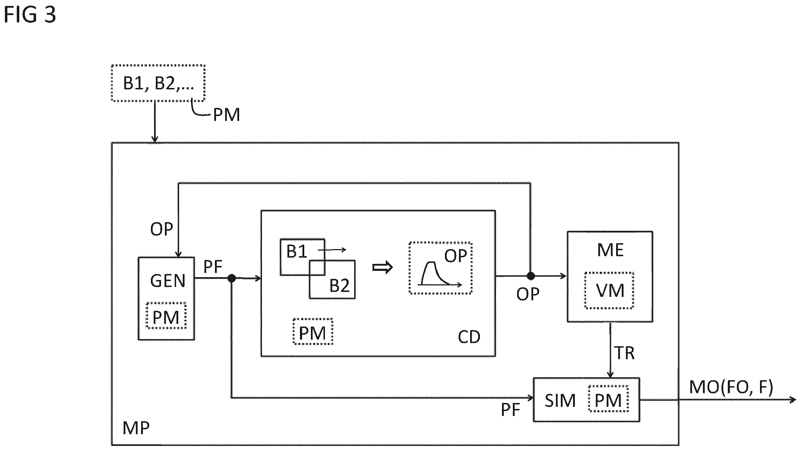

Figur 3 veranschaulicht eine erfindungsgemäße Anordnung mit einer Montageplanungseinrichtung MP zum Ermitteln von Montageoperationen MO zum Montieren des Produkts P. Wie oben schon erwähnt, wird der Montageplanungseinrichtung MP das Produktmodell PM zugeführt, aus dem die Montageplanungseinrichtung MP die Montageoperationen MO ableitet. Das Produktmodell PM spezifiziert das zusammenzufügende Produkt P durch die virtuellen Bauteile B1, B2, ....

Die Montageplanungseinrichtung MP weist einen Pfadgenerator GEN, eine damit gekoppelte Kollisionserkennung CD, eine mit der Kollisionserkennung CD gekoppelte Mustererkennung ME sowie einen mit dem Pfadgenerator GEN und der Mustererkennung ME gekoppelten Simulator SIM auf. Der Pfadgenerator GEN, die Kollisionserkennung CD und der Simulator SIM greifen bestimmungsgemäß auf das Produktmodell PM zu.

Der Pfadgenerator GEN dient zum Generieren einer Vielzahl von unterschiedlichen Pfaden PF auf denen ein jeweiliges virtuelles Bauteil B1 bzw. B2,... im Produktmodell PM virtuell bewegt werden kann. Die Generierung erfolgt dabei anhand des Produktmodells PM. Vorzugsweise kann der Pfadgenerator GEN neben unterschiedlichen Pfaden auch unterschiedliche Orientierungen, in denen ein jeweiliges virtuelles Bauteil bewegt wird, generieren.

Der Pfadgenerator GEN übermittelt die generierten Pfade PF zur Kollisionserkennung CD. Letztere führt die durch die Pfade PF spezifizierten virtuellen Bewegungen für ein jeweiliges virtuelles Bauteil, z.B. B1, aus und prüft während einer jeweiligen virtuellen Bewegung, ob das jeweilige virtuelle Bauteil, hier B1, mit einem der anderen virtuellen Bauteile, hier B2, des Produktmodells PM kollidiert. Sobald eine Kollision festgestellt wird, ermittelt die Kollisionserkennung CD einen jeweiligen Verlauf OP eines Überlappungsvolumens im korrespondierenden Verlauf der virtuellen Bewegung. Ein solcher Überlappungsverlauf OP kann beispielsweise durch eine Abfolge von ermittelten Volumenwerten dargestellt werden.

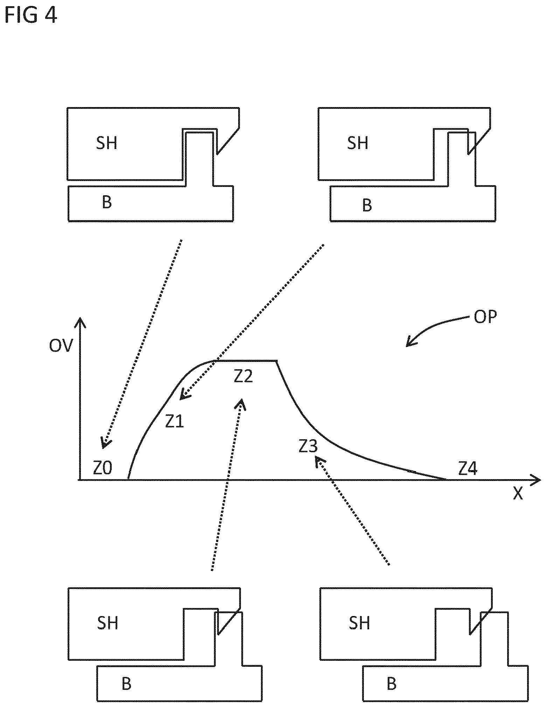

Figur 4 veranschaulicht einen typischen Verlauf OP eines Überlappungsvolumens OV bei einer virtuellen Bewegung. Es sei angenommen, dass Letztere eine virtuelle, horizontale Verschiebung eines Bauteils B gegenüber einem Schnapphaken SH einer Schnappverbindung ist. Das Überlappungsvolumen OV ist gegen eine Verschiebungsstrecke X entlang des Bewegungspfades aufgetragen. Der Überlappungsverlauf OP zeigt je nach Verschiebungszustand charakteristische Verlaufsphasen Z0 - Z4.

Zu Beginn der virtuellen Bewegung besteht zunächst keine Überlappung zwischen dem Bauteil B und dem Schnapphaken SH. Während dieser Verlaufsphase Z0 verschwindet das Überlappungsvolumen OV im Wesentlichen. In der Verlaufsphase Z1 überlappt das Bauteil B in zunehmendem Maße mit dem Schnapphaken SH. Entsprechend steigt das Überlappungsvolumen OV bis zu einem maximalen Überlappungsvolumen an. Letzteres charakterisiert eine für die betrachtete virtuelle Bewegung maximale Überlappung zwischen dem Bauteil B und dem Schnapphaken SH. Typischerweise entspricht das maximale Überlappungsvolumen im Wesentlichen einem Volumen eines fixierenden Teilstücks des Schnapphakens SH, gewissermaßen des eigentlichen Haltehakens. Das maximale Überlappungsvolumen bleibt typischerweise im Wesentlichen so lange konstant, bis sich Teile des Bauteils B aus dem Schnapphaken virtuell herausbewegen. Die Phase mit im Wesentlichen konstantem, maximalem Überlappungsvolumen entspricht in Figur 4 der Verlaufsphase Z2. In der daran anschließenden Verlaufsphase Z3 fällt das Überlappungsvolumen OV im Zuge der weiteren Verschiebung, bis es schließlich in der Verlaufsphase Z4 wieder im Wesentlichen verschwindet, sobald sich das Bauteil B nicht mehr mit dem Schnapphaken SH überlappt.

Das weitere Verfahren wird wieder anhand von Figur 3 veranschaulicht.

Der Pfadgenerator GEN sucht und/oder generiert bevorzugt Pfade PF, gegebenenfalls mit Orientierungen, auf denen sich ein jeweiliges virtuelles Bauteil möglichst ohne Überlappung aus dem Produktmodell PM heraus bewegen lässt. Auf einem solchen Pfad kann das jeweils korrespondierende reale Bauteil in der Regel ohne wesentlichen Kraftaufwand aus dem Produkt P heraus bewegt bzw. in das Produkt P eingefügt werden. Durch gezielte Selektion derartiger Pfade und ggf. Orientierungen, bei denen ein Überlappungsvolumen einen vorgegebenen Schwellwert unterschreitet, können insbesondere eine geeignete Fügerichtung und ggf. Fügeorientierung für ein jeweiliges reales Bauteil ermittelt werden.

Falls sich für ein jeweiliges virtuelles Bauteil kein solcher im Wesentlichen überlappungsfreier Pfad auffinden lässt, sucht, generiert bzw. selektiert der Pfadgenerator GEN bevorzugt Pfade PF, ggf. mit zugehörigen Orientierungen, auf denen sich das jeweilige virtuelle Bauteil mit möglichst geringer Überlappung aus dem Produktmodell PM heraus bewegen lässt.

Zu den vorstehenden Zwecken wird vorzugsweise ein jeweiliger Überlappungsverlauf OP von der Kollisionserkennung CD zum Pfadgenerator GEN zurückgeführt, um die Pfadgenerierung gezielt in Richtung von Pfaden mit möglichst geringer Überlappung zu treiben. Vorzugsweise kann ein Schwellwert für das Überlappungsvorlumen vorgesehen sein, bei dessen Überschreitung ein Pfad bzw. eine Orientierung verworfen wird.

Kann für ein jeweiliges virtuelles Bauteil kein Pfad mit hinreichend geringer Überlappung gefunden werden, wird durch den Pfadgenerator GEN ein anderes virtuelles Bauteil des Produktmodells PM gesucht, das sich mit hinreichend geringer Überlappung aus dem Produktmodell PM virtuell herausbewegen lässt. Auf diese Weise kann insbesondere eine vorteilhafte Fügereihenfolge für die Bauteile des Produkts P ermittelt werden.

Ein jeweiliger Überlappungsverlauf OP wird von der Kollisionserkennung CD weiterhin zur Mustererkennung ME übermittelt. Die Mustererkennung ME verfügt über eine Bibliothek von vorgegebenen Verlaufsmustern VM, die für einen Überlappungsverlauf bei virtuellen Bewegungen von Schnappverbindungen charakteristisch sind.

Ein Beispiel für einen solchen charakteristischen Überlappungsverlauf wurde in Figur 4 veranschaulicht. Als charakteristische Verlaufsmuster VM können insbesondere ein Verlauf eines Anstiegs eines Überlappungsvolumens (Verlaufsphase Z1 in Figur 4), ein maximales Überlappungsvolumen (Verlaufsphase Z2) und/oder ein Verlauf einer Abnahme des Überlappungsvolumens (Verlaufsphase Z3) spezifiziert sein.

Anhand der vorgegebenen Verlaufsmuster VM prüft die Mustererkennung ME, ob der jeweilige Überlappungsverlauf OP charakteristisch für eine Schnappverbindung ist.

Eine Schnappverbindung kann durch die Mustererkennung ME beispielsweise dann als solche erkannt werden, wenn ein jeweiliges Überlappungsvolumen von einem vernachlässigbaren Wert bis zu einem in einem Verlaufsmuster VM vorgegebenen Volumen eines Haltehakens ansteigt und nach einer konstanten Phase wieder auf einen vernachlässigbaren Wert abfällt.

Alternativ oder zusätzlich können durch die Mustererkennung ME im Verlauf der virtuellen Bewegung räumliche Überlappungsbereiche im jeweiligen Überlappungsverlauf OP auf eine Querschnittsebene in Richtung und/oder senkrecht zur virtuellen Bewegung oder senkrecht zu einer Koordinatenachse projiziert werden. Auf diese Weise kann durch die Mustererkennung ME eine Sequenz aufeinanderfolgender Umrisse der projizierten Überlappungsbereiche ermittelt und nach für Schnappverbindungen charakteristischen Merkmalen untersucht werden. Bei einem Schnapphaken sind die erhaltenen Umrisse häufig Kurven, die aus einfachen Kurvenelementen wie Linien oder Kreisbögen zusammengesetzt sind. Durch die Mustererkennung ME kann dann geprüft werden, ob eine jeweilige Sequenz aufeinanderfolgender Kurvenelemente einem vorgegebenen, für Schnapphaken charakteristischen Satz von Regeln genügt. Diese Regeln können vorteilhafterweise durch die Verlaufsmuster VM spezifiziert werden. Die Regeln können insbesondere Bedingungen für Winkel zwischen verschiedenen Kurvenelementen oder für Längen verschiedener Kurvenelemente umfassen. Sollte eine Sequenz von Kurvenelementen alle Regeln erfüllen, kann durch die Mustererkennung ME ein Erkennen einer Schnappverbindung signalisiert werden.

Falls durch die Mustererkennung ME anhand eines jeweiligen Überlappungsverlaufs OP eine Schnappverbindung erkannt wird, erzeugt die Mustererkennung ME ein Triggersignal TR und übermittelt dieses an den Simulator SIM. Parallel dazu wird derjenige Pfad PF, der diesen Überlappungsverlauf OP induziert, vom Pfadgenerator GEN zum Simulator SIM übermittelt.

Durch das Triggersignal TR wird der Simulator SIM dazu veranlasst, aus dem übermittelten Pfad PF eine Fügeoperation FO abzuleiten und deren Ausführung anhand des Produktmodells PM physikalisch zu simulieren. Die Fügeoperation FO spezifiziert vorzugsweise eine Fügetrajektore, entlang der das jeweilige virtuelle Bauteil und damit das reale Bauteil in das zusammenzufügende Produkt P einzufügen ist. Die Fügetrajektorie kann vorzugsweise durch Umkehrung der Pfades PF erhalten werden. Gegebenenfalls kann durch die Fügeoperation FO auch eine Orientierung oder ein Verlauf einer Orientierung spezifiziert werden, in der das jeweilige virtuelle Bauteil und damit das reale Bauteil in das zusammenzufügende Produkt P einzufügen ist.

Zur physikalischen Simulation derartiger Fügeoperationen stehen viele effiziente Simulationsverfahren, insbesondere Finite-Elemente-Verfahren zur Verfügung.

Bei der Simulation der Fügeoperation FO wird durch den Simulator SIM insbesondere eine durch die Fügeoperation FO bedingte Deformation des jeweils bewegten virtuellen Bauteils und/oder eines damit wechselwirkenden Bauteils ermittelt. Darüber hinaus wird durch den Simulator SIM eine zur Deformation erforderliche Fügekraft ermittelt.

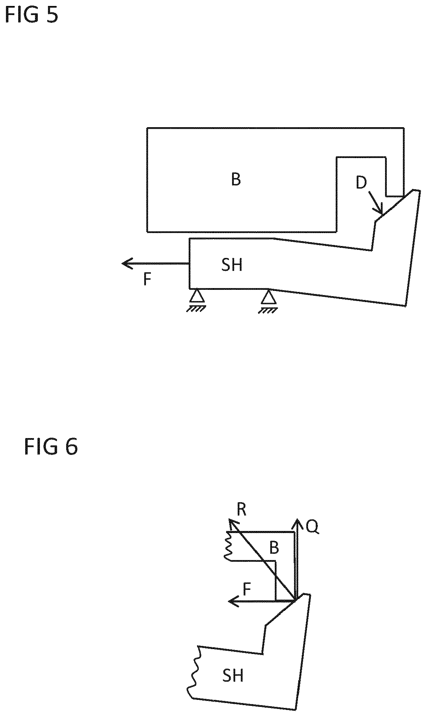

Figur 5 veranschaulicht eine Deformation D eines Schnapphakens SH, der mit der Fügekraft F über ein Bauteil B geschoben wird. Durch Druck der an der Berührungsstelle des Bauteils B mit dem Schnapphaken SH angreifenden Fügekraft F wird der Schnapphaken SH in Richtung der Deformation D gebogen.

Eine resultierende Kräfteverteilung am Schnapphaken SH wird durch Figur 6 weiter veranschaulicht. Die Fügekraft F sowie eine die Biegung des Schnapphakens SH induzierende Querkraft Q bilden zusammen eine resultierende Kraft R in Richtung der Deformation D.

Im vorliegenden Ausführungsbeispiel wird die Fügekraft F durch den Simulator SIM mittels einer Finite-Elemente-Simulation auf einem diskreten dreidimensionalen Gittermodell des Produkts P oder zumindest der Bauteile B und SH ermittelt. Die zur Simulation erforderlichen Materialeigenschaften der beteiligten Bauteile B und SH werden dem Produktmodell PM entnommen. Das Gittermodell kann mittels bekannter Verfahren im Wesentlichen automatisch aus dem Produktmodell PM generiert werden.

Bei der Simulation wird vorzugsweise diejenige Deformation D an der Spitze des Schnapphakens SH aufgebracht, die einer Dicke oder einer Überlappungsbreite des Bauteils B oder des Schnapphakens SH in der Schnappverbindung entspricht. Alternativ kann die Deformation D als eine Höhe eines Hinterschnitts des Schnapphakens SH ermittelt werden.

Mittels der Finite-Elemente-Simulation kann dann die resultierende Kraft R für die Deformation D ermittelt werden. Die Projektion der resultierenden Kraft R auf die Fügerichtung entspricht dann der zum Fügen aufzuwendenden Fügekraft F. Vorzugsweise kann zur Fügekraft F noch ein zusätzlicher Beitrag zur Überwindung von Reibungskräften addiert werden. Auch dieser Beitrag kann im Rahmen der Finite-Elemente-Simulation ermittelt werden.

Sofern in einen Fügeprozess gleichzeitig mehrere Schnappverbindungen involviert sind, ergibt sich eine gesamte Fügekraft aus einer Summe der für die einzelnen Schnappverbindungen ermittelten Fügekräfte.

Die durch den Simulator SIM ermittelte Fügeoperation FO wird schließlich zusammen mit der hierfür erforderlichen Fügekraft F in Form einer Montageoperation MO zur Montage des Produkts P durch die Montageplanungseinrichtung MP ausgegeben.

## Patentansprüche

1. Computerimplementiertes Verfahren zum Ermitteln von Montageoperationen (MO) für ein aus mehreren Bauteilen zusammenzusetzendes Produkt (P), wobei
a) ein digitales Produktmodell (PM) eingelesen wird, das die Bauteile hinsichtlich ihrer räumlichen Geometrie und räumlichen Anordnung im Produkt (P) in Form von virtuellen Bauteilen (B, B1, B2, SH) spezifiziert,
b) ein jeweiliges virtuelles Bauteil (B, B1, B2, SH) im Produktmodell (PM) virtuell bewegt wird, währenddessen ein Verlauf (OP) einer Überlappung des bewegten virtuellen Bauteils (B, B1, B2, SH) mit mindestens einem anderen virtuellen Bauteil des Produkts (P) ermittelt wird,
c) mittels einer Mustererkennung (ME) geprüft wird, ob der ermittelte Überlappungsverlauf (OP) einem Verlaufsmuster (VM) einer Schnappverbindung entspricht, und
d) bei positivem Prüfungsergebnis
- aus der virtuellen Bewegung des jeweiligen virtuellen Bauteils (B, B1, B2, SH) eine Fügeoperation (FO) abgeleitet wird,
- eine Simulation der Fügeoperation (FO) durchgeführt wird, durch die eine durch die Fügeoperation (FO) bedingte Deformation (D) des jeweils bewegten virtuellen Bauteils (B, B1, B2, SH) und/oder des mindestens einen anderen virtuellen Bauteils sowie eine zur Deformation (D) erforderliche Fügekraft (F) ermittelt werden, und
- die Fügeoperation (FO) mit der ermittelten Fügekraft (F) als Montageoperation (MO) zur Montage des Produkts (P) ausgegeben wird.

2. Verfahren nach einem der vorhergehenden Ansprüche, **dadurch gekennzeichnet, dass**
anhand des ermittelten Überlappungsverlaufs (OP) sowie der virtuellen Bewegung des jeweiligen virtuellen Bauteils (B, B1, B2, SH) eine räumliche Position und/oder Orientierung der Schnappverbindung ermittelt wird.

3. Verfahren nach einem der vorhergehenden Ansprüche, **dadurch gekennzeichnet,**
**dass** das jeweilige virtuelle Bauteil (B, B1, B2, SH) auf einer Vielzahl von unterschiedlichen Pfaden (PF) virtuell bewegt wird, wobei jeweils ein Überlappungsvolumen (OV) im ermittelten Überlappungsverlauf (OP) ermittelt wird,
**dass** aus den Pfaden (PF) ein erster Pfad selektiert wird, der ein geringeres Überlappungsvolumen als andere Pfade aufweist, und
**dass** aus dem ersten Pfad eine Fügerichtung für das jeweilige virtuelle Bauteil (B, B1, B2, SH) abgeleitet wird, falls das Überlappungsvolumen des ersten Pfades einen vorgegebenen Schwellwert unterschreitet.

4. Verfahren nach einem der vorhergehenden Ansprüche, **dadurch gekennzeichnet,**
**dass** das jeweilige virtuelle Bauteil (B, B1, B2, SH) in einer Vielzahl von unterschiedlichen Orientierungen virtuell bewegt wird, wobei jeweils ein Überlappungsvolumen (OV) im ermittelten Überlappungsverlauf (OP) ermittelt wird,
**dass** aus den Orientierungen eine erste Orientierung selektiert wird, die ein geringeres Überlappungsvolumen als andere Orientierungen aufweist, und
**dass** aus der ersten Orientierung eine Fügeorientierung für das jeweilige virtuelle Bauteil (B, B1, B2, SH) abgeleitet wird, falls das Überlappungsvolumen der ersten Orientierung einen vorgegebenen Schwellwert unterschreitet.

5. Verfahren nach einem der vorhergehenden Ansprüche, **dadurch gekennzeichnet, dass**
dass die virtuellen Bauteile (B, B1, B2, SH) in unterschiedlichen Reihenfolgen virtuell bewegt werden, wobei jeweils ein Überlappungsvolumen (OV) im ermittelten Überlappungsverlauf (OP) ermittelt wird,
dass aus den Bewegungsreihenfolgen eine erste Reihenfolge selektiert wird, die ein geringeres Überlappungsvolumen als andere Bewegungsreihenfolgen aufweist, und
dass aus der ersten Reihenfolge eine Fügereihenfolge für die virtuellen Bauteile (B, B1, B2, SH) abgeleitet wird.

6. Verfahren nach einem der vorhergehenden Ansprüche, **dadurch gekennzeichnet, dass**
bei der Mustererkennung (ME) ein Verlauf eines Anstiegs eines Überlappungsvolumens (OV) im ermittelten Überlappungsverlauf (OP), ein Maximum des Überlappungsvolumens (OV) und/oder ein Verlauf einer Abnahme des Überlappungsvolumens (OV) mit dem Verlaufsmuster (VM) verglichen wird.

7. Verfahren nach einem der vorhergehenden Ansprüche, **dadurch gekennzeichnet,**
**dass** ein räumlicher Überlappungsbereich im ermittelten Überlappungsverlauf (OP) auf eine Querschnittsebene in Richtung der virtuellen Bewegung projiziert wird,
**dass** ein Umriss des projizierten Überlappungsbereichs auf der Querschnittsebene erfasst wird, und
**dass** der erfasste Umriss bei der Mustererkennung (ME) mit dem Verlaufsmuster verglichen wird.

8. Verfahren nach einem der vorhergehenden Ansprüche, **dadurch gekennzeichnet, dass**
die Mustererkennung (ME) mittels eines Maschinenlernmoduls durchgeführt wird, das darauf trainiert ist, Verlaufsmuster von Schnappverbindungen zu erkennen.

9. Verfahren nach einem der vorhergehenden Ansprüche, **dadurch gekennzeichnet, dass**
als Deformation (D) eine Überlappungsbreite des ermittelten Überlappungsverlaufs (OP) ermittelt wird.

10. Computerimplementiertes Verfahren zum Montieren eines aus mehreren Bauteilen zusammenzusetzenden Produkts (P),
wobei Montageoperationen (MO) gemäß einem der vorhergehenden Ansprüche ermittelt werden, und
wobei das Produkt (P) gemäß den ermittelten Montageoperationen (MO) montiert wird.

11. Anordnung zum Ermitteln von Montageoperationen für ein aus mehreren Bauteilen zusammenzusetzendes Produkt (P), mit Mitteln zum Ausführen der Schritte eines Verfahrens nach einem der Ansprüche 1 bis 9.

12. Anordnung zum Montieren eines aus mehreren Bauteilen zusammenzusetzenden Produkts,
mit einer Anordnung zum Ermitteln von Montageoperationen (MO) gemäß Anspruch 11 sowie
mit Mitteln (MS) zum Montieren des Produkts (P) gemäß den ermittelten Montageoperationen (MO).

13. Computerprogrammprodukt, umfassend Befehle, die bei der Ausführung des Programms durch einen Computer diesen veranlassen, ein Verfahren nach einem der Ansprüche 1 bis 10 auszuführen.

14. Computerlesbares Speichermedium mit einem Computerprogrammprodukt nach Anspruch 13.
